# FASCICULE DE BREVET EUROPEEN

(11) **EP 3 894 304 B1**
(45) Date de publication et mention de la délivrance du brevet: **24.01.2024**
(21) Numéro de dépôt: 19842588.6
(22) Date de dépôt: 22.11.2019
(51) Int. Cl.: B62D 25/16, B62D 25/18, B60R 13/08

(54) **FEUILLURE DE PARE-BOUE POUR L'HABILLAGE D'UN PASSAGE DE ROUE D'UN VEHICULE AUTOMOBILE, ET VEHICULE AUTOMOBILE L'INCORPORANT**
KOTFLÜGEL FÜR DIE VERKLEIDUNG EINES RADKASTENS EINES KRAFTFAHRZEUGES UND KRAFTFAHRZEUG DAMIT
MUDGUARD REBATE FOR THE TRIM OF A WHEEL-HOUSING OF A MOTOR VEHICLE, AND MOTOR VEHICLE INCORPORATING IT

(30) Priorité: 10.12.2018 FR 1872564
(43) Date de publication de la demande: 20.10.2021
(73) Titulaire: Stellantis Auto SAS, 78300 Poissy (FR)
(72) Inventeur: RIVIERRE, Laurent, 75015 Paris (FR); GALLERNE, Jean Christophe, 78114 Magny Les Hameaux (FR)
(86) Numéro de dépôt international: PCT/FR2019/052790
(87) Numéro de publication internationale: WO 2020/120856

(56) Documents cités:
- EP-A2- 1 721 811
- CN-U- 201 660 027
- FR-A1- 2 918 031
- FR-A1- 2 932 449
- FR-A1- 3 016 853
- FR-A1- 3 040 677
- FR-A1- 3 047 963
- US-B2- 8 844 971

## Description

### Domaine technique

La présente invention revendique la priorité de la demande française 1872564 déposée le 10 décembre 2018.

La présente invention se rapporte de manière générale à la conception des sous-ensembles de carrosserie des véhicules automobiles. Elle concerne plus particulièrement une feuillure de pare-boue pour l'habillage d'un passage de roue d'un véhicule automobile, ainsi qu'un véhicule automobile l'incorporant.

### Etat de la technique

Les sous-ensembles de carrosserie des véhicules automobiles sont composés d'éléments de carrosserie qui sont dits « externes » en ce sens qu'ils sont visibles de l'extérieur du véhicule. On désigne généralement par « peau » l'ensemble des éléments de carrosserie du véhicule qui comprend, notamment, le côté de caisse (ou côté d'habitacle), les portières, le pare-brise et la lunette arrière, le pavillon, les ailes avant, le capot, le volet de coffre arrière ou le hayon, le pare-chocs avant et le pare-chocs arrière. Un élément de structure interne est inversement une pièce de la caisse du véhicule disposée en retrait par rapport à la peau du véhicule, vers un axe médian du véhicule s'étendant suivant la direction longitudinale de ce dernier. L'ensemble des éléments de structure internes du véhicule comprend notamment le cadre plancher ou plateforme, les longerons, les brancards, les traverses, le tablier, la jupe arrière, etc. Ces éléments, essentiellement, appartiennent à la caisse autoporteuse du véhicule lorsque le véhicule est construit sur cette base. On notera que la caisse autoporteuse comprend aussi, par conception, certains éléments de carrosserie externes comme le côté de caisse.

Le passage de roues d'un véhicule automobile est une partie de la carrosserie du véhicule formé d'un sous-ensemble d'éléments de carrosserie, de tendance cylindrique, qui coiffe partiellement et avec beaucoup de jeu une roue du véhicule. Dans beaucoup de véhicules automobiles, l'arche d'un passage de roue arrière est formée par le côté de caisse du véhicule prolongé par le pare-chocs arrière suivant la direction longitudinale du véhicule, vers l'arrière.

Les véhicules automobiles comprennent aussi des pièces de carrosserie, appelées pare-boues, qui sont adaptées pour habiller l'arche de passage de roue de chaque roue du véhicule. Un pare-boue se présente sous la forme d'une feuillure en arc-de-cercle avec un rayon de courbure correspondant sensiblement à celui de l'arche de passage de roue qu'il doit habiller. La feuillure de pare-boue assure une triple fonction : une protection du soubassement du véhicule contre les projections d'éléments extérieurs (eau de pluie, boue, graviers, etc.) pouvant résulter de la rotation de la roue ; une protection acoustique pour les occupants du véhicule en absorbant les bruits de roulage du véhicule sur la route et les bruits causés par les projections précitées ; et enfin un effet esthétique en masquant le soubassement et certains des organes du véhicule qui seraient visibles en tout ou partie depuis l'extérieur du passage de roue. Pour ce faire, le pare-boue recouvre par le dessous le (ou les) élément(s) externe(s) de la carrosserie du véhicule qui délimite(nt) le passage de roue.

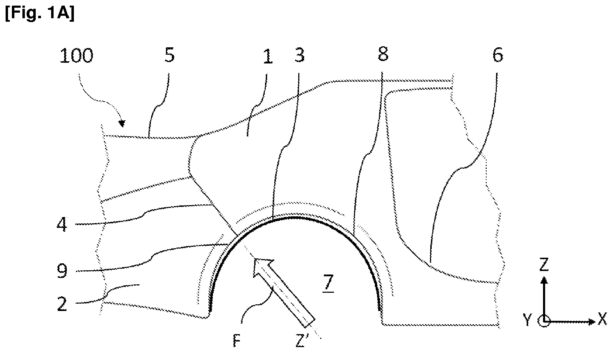

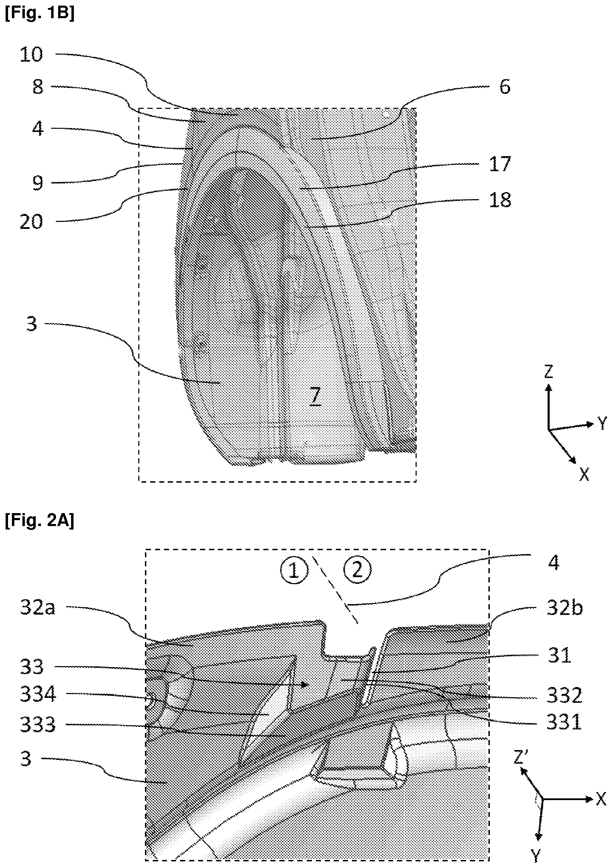

La **figure 1A** et la **figure 1** **B** montrent de façon schématique une partie arrière de la carrosserie d'un véhicule automobile, avec un passage de roue arrière droit qui est habillé par une feuillure de pare-boue selon l'art antérieur. Le trièdre orthogonal représenté en bas à droite des figures indique la direction longitudinale X du véhicule orientée vers l'avant dudit véhicule, la direction transversale Y du véhicule orientée vers l'intérieur dudit véhicule (c'est-à-dire vers l'axe longitudinal médian du véhicule), et la direction verticale Z (ou direction de la gravité) orientée vers le haut.

En référence à la figure 1A, l'arche du passage de roue 7 pour la roue arrière droite du véhicule automobile est délimitée par des portions 8 et 9 d'un côté de caisse 1 et d'un pare-chocs arrière 2 du véhicule 100, respectivement. Ces portions 8 et 9 sont sensiblement de forme en arc-de-cercle et coaxiales. Elles s'étendent dans le prolongement l'une de l'autre suivant la direction longitudinale du véhicule afin de former l'arche de passage de roue 7.

La flèche F montrée à la figure représente une direction de référence qui sera utilisée dans la présente description, à savoir une direction radiale Z' orientée depuis le centre de l'arche de passage de roue vers la périphérie de ladite arche. La flèche F pointe plus spécifiquement vers la jonction entre les portions 8 et 9 du côté de caisse 1 et du pare-chocs arrière 2 du véhicule 100, respectivement. Dans ce qui suit, et sauf mention contraire expresse, les termes « dessus » ou « dessous », et les expressions « au-dessus » ou « au-dessous », « par-dessus » ou « par-dessous » et « 'par le dessus » ou « par le dessous » sont utilisés en référence à l'observation suivant la direction radiale Z' de cette flèche F.

Un pare-boue 3 est ainsi adapté pour recouvrir le passage de roue 7 par le dessous.

En référence à la figure 1B, une découpe 31 est réalisée dans la feuillure du pare-boue 3, au niveau de la jonction 4 entre le côté de caisse 1 et le pare-chocs arrière 2, afin de permettre le montage du pare-boue. Cette découpe possède en fait une double fonction. Premièrement, elle autorise la déformation élastique de la feuillure qui permet le montage du pare-boue 3 par engagement de son bord extérieur par-dessus un bord tombé périphérique de la portion 8 du côté de caisse 1 et par-dessous un bord tombé périphérique de la portion 9 du pare-chocs 2. Deuxièmement, elle est destinée, en outre, à ouvrir une fenêtre dans la feuillure pour échapper les extrémités basses de bords tombés à tendance axiale du côté de caisse et du pare-chocs, respectivement, ainsi que des éléments de fixation du pare-chocs sur le côté de caisse qui sont présents à ce niveau. A ce niveau en effet, les deux bords tombés à tendance axiale précités du côté de caisse et du pare-chocs, respectivement, sont abutés l'un contre l'autre suivant la direction longitudinale du véhicule lors du montage du pare-chocs sur le côté de caisse, et sont maintenus pressés entre eux par l'intermédiaire d'une pièce appelée presseur de pare-chocs, grâce à des éléments de fixation comprenant par exemple au moins une agrafe, un écrou et une vis.

Une petite portion de la caisse du véhicule automobile est visible à travers la découpe 31 par un observateur regardant, dans le passage de roue 7, sensiblement suivant la direction axiale de la flèche F. Avec certaines couleurs de caisse claires, notamment mais pas uniquement le blanc, la couleur de la caisse est fortement visible car le reste de l'environnement (pare-boue et pare-chocs) est noir ou gris foncé. Ceci a un impact négatif en termes de qualité perçue. Ce défaut de qualité perçue est difficilement acceptable, notamment, dans le cadre d'un véhicule haut de gamme.

Le brevet FR2932449 décrit une cloison pour masquer une ligne de découpe sur un pare-boue afin d'améliorer la qualité perçue. Cependant, cette cloison de masquage est venue de matière du côté de caisse ou du pare-chocs, par l'intermédiaire d'une découpe dans le côté de caisse ou le pare-chocs suivant une ligne curviligne, ou par un surmoulage d'une matière plastique sur le côté de caisse ou sur le pare-chocs. Il est ainsi nécessaire de procéder à des modifications de la fabrication du côté de caisse ou du pare-chocs, soit en déterminant à nouveau le profil de découpe du bord de passage de roue, soit en ajoutant une opération supplémentaire de surmoulage de la cloison de masquage.

### Résumé de l'invention

L'invention propose un aménagement particulier du pare-boue fournissant une solution technique à la problématique de qualité perçue posée, qui est une alternative à la solution selon l'art antérieur précité. Plus particulièrement, l'invention permet de masquer le côté de caisse au niveau de la jonction entre le pare-chocs et le côté de caisse afin de supprimer la visibilité locale de la couleur de caisse dans l'arche de roue arrière et ainsi améliorer la qualité perçue de cette zone, sans nuire toutefois à la capacité de montage du pare-boue, et sans exiger de modification du côté de caisse ni du pare-chocs.

A cet effet, un premier aspect de l'invention propose une feuillure de pare-boue adaptée pour habiller une arche de passage de roue d'un véhicule automobile délimitée, d'une part, par une portion d'un premier élément de carrosserie vers l'avant du véhicule et, d'autre part, par une portion d'un second élément de carrosserie vers l'arrière du véhicule, lesdites portions étant de formes en arc-de-cercle, coaxiales et dans le prolongement l'une de l'autre suivant la direction longitudinale du véhicule,
ladite feuillure de pare-boue étant sensiblement de forme en arc-de-cercle, avec un rayon de courbure correspondant sensiblement au rayon de courbure de l'arche de passage de roue,
ladite feuillure comprenant, dans une zone destinée à recouvrir l'arche de passage de roue au niveau de la jonction entre les portions respectives du premier élément de carrosserie et du second élément de carrosserie qui délimitent l'arche de passage de roue :
   une découpe en forme de fente transversale s'étendant depuis un bord extérieur du pare-boue vers l'intérieur du pare-boue et adaptée pour autoriser une déformation du pare-boue lors du montage du pare-boue, ainsi que : un agencement en forme de **cuvette** adjacente à la fente transversale suivant la direction longitudinale du véhicule, **faisant saillie vers le centre** du pare-boue afin de ménager un espace en creux sur le dessus du pare-boue qui est adapté pour échapper des parties respectives du premier élément de carrosserie et/ou du second élément de carrosserie, et/ou des éléments de fixation pour la fixation entre eux desdits premier et second éléments de carrosserie, **ladite cuvette étant fermée dans toutes les directions sauf vers le dessus du pare-boue et sauf vers l'extérieur du passage de roue.**

Dans un mode de réalisation, un bord extérieur de la feuillure comprend deux portions qui sont situées en avant et en arrière, respectivement, de la fente transversale suivant la direction longitudinale du véhicule, et par lesquelles le pare-boue peut être monté en appui par-dessus un bord tombé d'orientation transversale du premier élément de carrosserie et par-dessous un bord tombé d'orientation transversale du second élément de carrosserie, respectivement, ou vice versa.

Dans un mode de réalisation, la cuvette a une forme sensiblement parallélépipédique, avec quatre faces fermées, et avec deux faces ouvertes vers **le haut du pare-boue et vers l'extérieur du passage de roue,** respectivement.

Une première face fermée de la cuvette peut alors être sensiblement d'orientation radiale, et s'étendre à partir d'un bord de la fente transversale vers le centre du pare-boue.

Dans un mode de réalisation, la cuvette est adjacente à la fente transversale, suivant la direction longitudinale du véhicule, de préférence du côté de ladite fente transversale qui est vers l'avant du véhicule pour une feuillure de pare-boue destinée à habiller un passage de roue arrière dudit véhicule.

Dans un mode de réalisation, la largeur de la fente suivant la direction longitudinale du véhicule est de 1 millimètre environ.

Dans un mode de réalisation, la longueur de la fente suivant la direction transversale du véhicule est comprise entre 50 et 100 millimètres environ.

Dans un second aspect, l'invention concerne également un véhicule automobile comprenant un passage de roue ainsi qu'une feuillure de pare-boue selon le premier aspect ci-dessus, pour l'habillage dudit passage de roue.

Dans un mode de réalisation du véhicule, le passage de roue est un passage de roue arrière dont l'arche est délimitée, d'une part, par un côté de caisse vers l'avant du véhicule et, d'autre part, par un pare-chocs arrière vers l'arrière du véhicule qui est dans le prolongement dudit côté de caisse suivant la direction longitudinale du véhicule, vers l'arrière du véhicule.

Dans ce cas la cuvette de la feuillure de pare-boue peut être adjacente à la fente transversale, suivant la direction longitudinale du véhicule, du côté de ladite fente transversale qui est vers l'avant du véhicule.

### Brève description des figures

D'autres caractéristiques et avantages de l'invention apparaîtront encore à la lecture de la description qui va suivre. Celle-ci est purement illustrative et doit être lue en regard des dessins annexés sur lesquels :
**[****Fig. 1A****]** est une représentation schématique d'une partie arrière de la carrosserie d'un véhicule automobile délimitée par un pare-chocs arrière et un côté de caisse ;
[Fig. 1B] est une représentation schématique d'un passage de roue d'un véhicule automobile, pour la roue arrière droite, en vue de trois-quarts avant ;
[Fig. 2A] est une vue de dessous d'une portion de la feuillure de pare-boue selon des modes de réalisation de l'invention, seule ;
[Fig. 2B] est la même vue que la Figure 2A, montrant le montage de la feuillure de pare-boue avec le pare-chocs ;
[Fig. 2C] est la même vue que la Figure 2A, montrant le montage de la feuillure de pare avec le pare-chocs et le côté de caisse ;
**[****Fig. 3A****]** est une vue de dessous, en coupe en perspective, d'une portion de la feuillure de pare-boue selon des modes de réalisation de l'invention, seule ;
**[****Fig. 3B****]** est la même vue que la figure 3A, montrant le montage de la feuillure de pare-boue, avec le côté de caisse en coupe ;
**[****Fig. 3C****]** est la même vue que la figure 3A, montrant le montage de la feuillure de pare-boue avec le côté de caisse et le pare-chocs en coupe ;
**[****Fig. 3D****]** est la même vue que la figure 3A, montrant le montage de la feuillure de pare-boue, avec le côté de caisse, le pare-chocs, le presseur de pare-chocs et des éléments de fixation associés, en coupe.

### Description des modes de réalisation

Dans la description de modes de réalisation qui va suivre et dans les Figures des dessins annexés, les mêmes éléments ou des éléments similaires portent les mêmes références numériques aux dessins.

L'invention va être décrite dans son application à une feuillure de pare-boue destiné à habiller un passage de roue arrière d'un véhicule automobile, et plus particulièrement le passage de roue arrière droit. Plus spécifiquement, le pare-boue a pour fonction de recouvrir, par le dessous, l'arche de ce passage de roue du véhicule.

Dans cette application, et en se référant à nouveau à la **figure 1A** déjà partiellement décrite en introduction, le premier élément de carrosserie du véhicule automobile 100 est par exemple le côté de caisse 1 (ou côté d'habitacle), qui délimite en outre un encadrement de porte arrière 6. Le second élément de carrosserie du véhicule 100 est par exemple le pare-chocs arrière 2 qui, dans l'exemple représenté, est adjacent à un volet 5 de coffre arrière.

Le passage de roue 7 est délimité par une portion 8 en arc-de-cercle du côté de caisse 1, ainsi que par une portion 9 en arc-de-cercle du pare-chocs 2. Les portions en arc de cercle 8 et 9 sont coaxiales. La portion 9 du pare-chocs 2 est disposée de façon longitudinale (c'est-à-dire suivant la direction X) dans le prolongement de la portion 8 du côté de caisse 1, vers l'arrière du véhicule 100. Le centre de l'arche de passage de roue ainsi formé coïncide sensiblement avec le centre du moyeu de la roue (non représentée), en condition de repos du véhicule. Ainsi, le passage de roue 7 coiffe la roue, avec beaucoup de jeu pour autoriser les débattements de la roue suivant la direction verticale Z qui sont dus à l'écrasement des amortisseurs sous l'effet des cahots de la route, et/ou les mouvements latéraux de la roue par rapport à l'axe longitudinal X du véhicule si la roue est une roue directrice.

La feuillure du pare-boue 3 est une pièce à tendance longitudinale, qui est adaptée pour habiller l'arche du passage de roue 7. A cet effet, elle est sensiblement de forme en arc-de-cercle, avec un rayon de courbure correspondant sensiblement au rayon de courbure de l'arche du passage de roue 7.

Par convention, lorsqu'ils sont utilisés en référence à un élément du passage de roue ou du pare-boue, et sauf mention contraire expresse, les termes « intérieur » ou « extérieur », ainsi que les expressions « à l'intérieur » ou « à l'extérieur », et « vers l'intérieur » ou « vers l'extérieur », sont utilisés par rapport au volume formé sous l'arche du passage de roue, considéré suivant la direction transversale Y du véhicule et en distinguant le côté droit et le côté gauche du véhicule (lesquels sont eux-mêmes définis par rapport à la direction de progression du véhicule en marche avant, suivant la direction longitudinale X). Ainsi par exemple, quel que soit le côté considéré du véhicule, droit ou gauche, la direction « vers l'intérieur » désigne, au sens de cette convention, la direction vers l'axe longitudinal médian du véhicule. Inversement, la direction « vers l'extérieur » désigne la direction transversale Y du côté opposé à l'axe longitudinal médian du véhicule. Plus généralement, les termes « intérieur » et « extérieur » utilisés aussi bien en référence au passage de roue qu'en référence au pare-boue qui est adapté pour habiller ce passage de roue, sont utilisés en référence à cette convention.

En référence à la **figure 1B****,** chacune des portions en arc-de-cercle 8 et 9 du côté de caisse 1 et du pare-chocs 2, respectivement, comprend, du côté extérieur du passage de roue 7, une face sensiblement verticale qui prend la référence 10 pour le côté de caisse 1 et qui prend la référence 20 pour le pare-chocs 2. La face 10 du côté de caisse 1 et la face 20 du pare-chocs comprennent chacune un bord tombé à tendance transversale, non visibles à la figure 1B. Ces bords tombés s'étendent sensiblement perpendiculairement aux faces 10 et 20 du côté de caisse 1 et du pare-chocs 2, respectivement, vers l'intérieur du passage de roue 7 suivant la direction transversale Y. Le bord extérieur du pare-boue 3, non visible à la figure 1B, coopère avec les bords tombés précités du côté de caisse 1 et du pare-chocs 2, pour le montage du pare-boue.

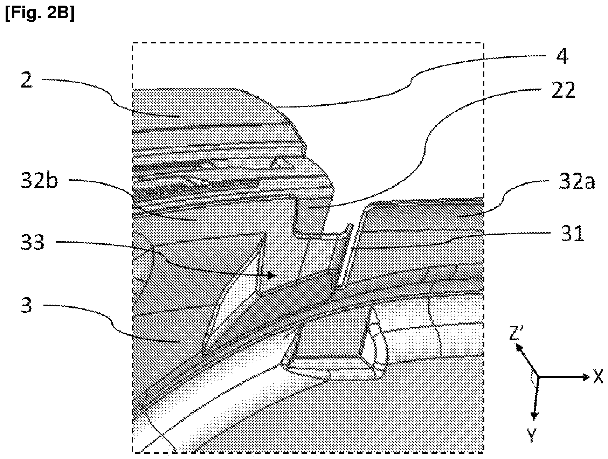

Le pare-boue 3 est monté par le dessous du passage de roue 7, en venant en appui du soubassement du véhicule du côté intérieur du passage de roue 7, et en appui des bords tombés susmentionnés du côté de caisse 1 et du pare-chocs 2 du côté extérieur du passage de roue. Ceci apparaîtra plus clairement de l'exposé qui sera donné plus bas de modes de réalisation de la feuillure de pare-boue selon l'invention. L'homme du métier appréciera que les bords tombés à tendance transversale du côté de caisse 1 et du pare-chocs 2, ainsi que le bord extérieur du pare-boue 3 ne sont pas visibles à la figure 2B car ils sont recouverts par des appliques de finition 17 et 18, généralement réalisée en matériau synthétique.

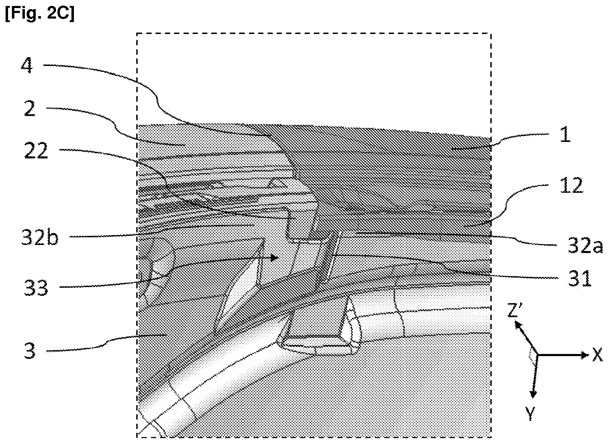

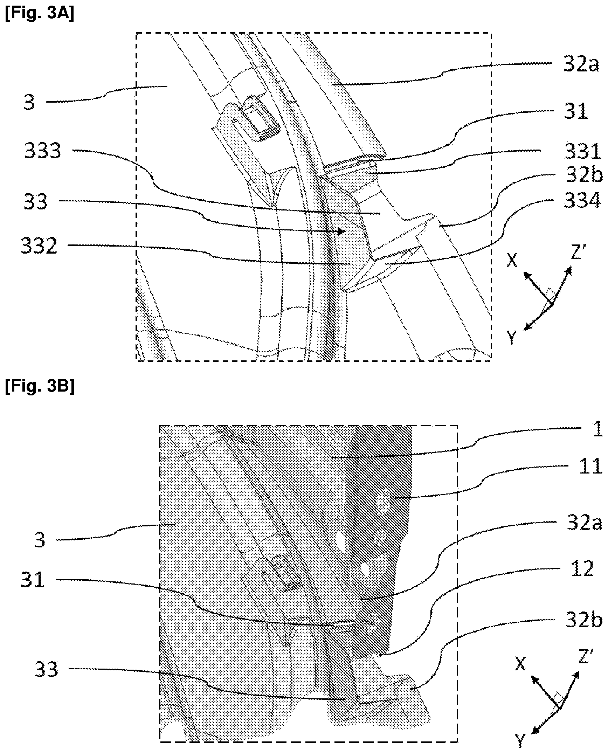

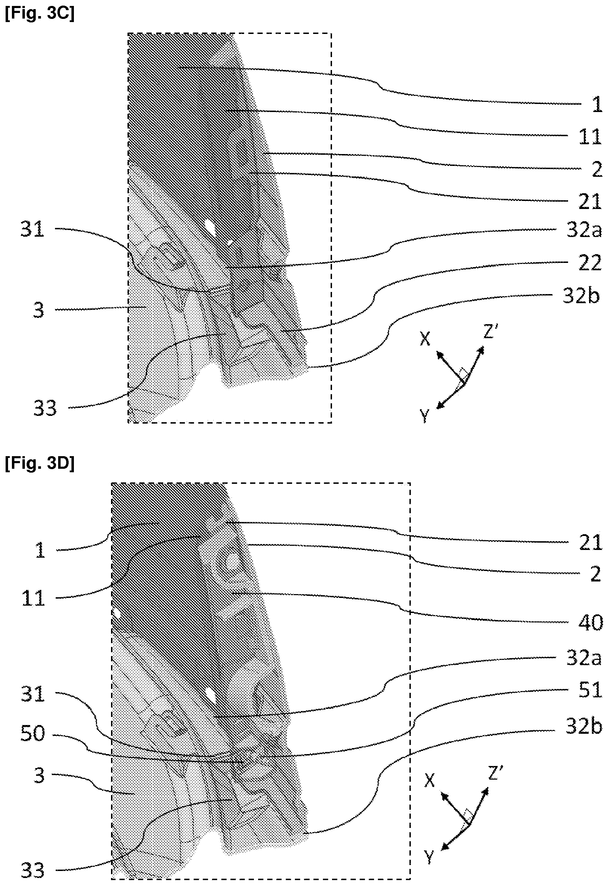

En référence aux **figures 2A-2C** et aux **figures 3A-3D****,** il va maintenant être décrit des modes de réalisation de la feuillure de pare-boue selon l'invention. Les figures 2A, 2B et 2C sont des vues de dessous en perspective d'une zone du pare-boue qui est destinée à recouvrir l'arche de passage de roue au niveau de la jonction 4 entre la portion 8 du côté de caisse 1 et la portion 9 du pare-chocs 3. Plus particulièrement, ces figures montrent le pare-boue 3 seul, le pare-boue 3 avec le pare-chocs 2, et le pare-boue 3 avec le pare-chocs 2 et avec le côté de caisse 1, respectivement. Les figures 3A, 3B, 3C et 3D sont quant à elles des vues de dessus en perspective de la même zone du pare-boue. Plus particulièrement ces figures montrent le pare-boue 3 seul, le pare-boue 3 avec le côté de caisse 1, le pare-boue 3 avec le côté de caisse 1 et avec le pare-chocs 2, et enfin le pare-boue avec le côté de caisse 1 et le pare-chocs 2 et avec en outre le presseur de pare-chocs 21 et des éléments de fixation associés, respectivement.

On considère tout d'abord la feuillure de pare-boue seule, telle qu'elle est montrée en perspective en vue de dessous et en vue de dessus, sur la **figure 2A** et la **figure 3A****,** respectivement. Ces figures montrent plus particulièrement la zone de la feuillure de pare-boue 3 qui est destinée à recouvrir l'arche de passage de roue au niveau de la jonction 4 entre des portions respectives du côté de caisse 1 et du pare-chocs arrière 2. Comme ces deux éléments de carrosserie ne sont pas représentés sur les figures 2A et 3A afin de préserver leur lisibilité, la zone de la jonction 4 entre eux est symbolisée par un trait discontinu orienté suivant la direction de l'axe Z', et des symboles reprenant les références 1 et 2 de ces éléments dans des cercles sont représenté de part et d'autre dudit trait discontinu, vers l'avant du véhicule (dans la direction longitudinale X du véhicule, vers l'avant) et vers l'arrière du véhicule (dans la direction longitudinale mais en sens opposé), respectivement.

Dans la zone représentée aux figures 2A et 3A, le pare-boue 3 comprend une découpe 31 en forme de fente transversale, c'est-à-dire une fente s'étendant suivant la direction transversale Y du véhicule. Plus particulièrement, la fente 31 s'étend depuis un bord extérieur du pare-boue (visible en haut de la figure 2A, et à droite sur la figure 3A) vers l'intérieur du pare-boue. La fonction de cette découpe est d'autoriser une déformation du pare-boue lors de son montage, ainsi qu'il sera explicité plus loin. Une fente d'une faible largeur suffit à cet effet. Par exemple la largeur de la fente 31, mesurée suivant la direction longitudinale X du véhicule) peut être égale à 1 millimètre (mm) environ. Sa longueur (mesurée suivant la direction transversale Y du véhicule) peut être comprise entre 50 et 100 mm, par exemple.

Toujours dans la zone représentée aux figures 2A et 3A, le pare-boue 3 comprend en outre **un agencement en forme de cuvette 33** adjacente à la fente transversale 31 suivant la direction longitudinale X du véhicule. La cuvette 33 fait saillie vers le centre du pare-boue afin de ménager un espace en creux sur le dessus du pare-boue qui est adapté pour échapper des parties des portions respectives côté de caisse 1 et du pare-chocs 2. Dit autrement, l'aménagement 33 est convexe (en saillie) lorsqu'il est vu de dessous comme à la figure 2A, et il est concave (en creux) lorsqu'il est vu de dessus comme à la figure 3A. L'aménagement 33 a pour fonction, outre de ménager un volume pour échapper des parties du côté de caisse 1 et du pare-chocs 2 lors du montage, de dissimuler lesdites parties à la vue d'un observateur placé dans l'arche de roue que le pare-boue recouvre par le dessous. A cet effet, la cuvette est fermée dans toutes les directions sauf vers le dessus du pare-boue, afin de pouvoir recevoir les parties précitées du côté de caisse 1 et du pare-chocs 2, et sauf du côté extérieur du pare-boue afin de pouvoir mettre en place le pare-boue en amenant la cuvette autour desdites parties par un mouvement de translation suivant la direction transversale Y, de l'extérieur vers l'intérieur du passage de roue.

Dans un mode de réalisation, conforme à l'exemple représenté aux figures, la cuvette 33 peut avoir une forme sensiblement parallélépipédique, avec quatre faces fermées 331, 332, 333 et 334 ainsi que deux faces ouvertes vers le haut du pare-boue et vers l'extérieur du passage de roue, respectivement. On désigne cette forme par « faux parallélépipède », ou « parallélépipède ouvert », en particulier un parallélépipède qui est ouvert sur deux faces, à savoir les deux faces précitées.

La première face fermée 331 de la cuvette 33 est sensiblement d'orientation radiale (i.e., elle s'étend suivant la direction Z'), et s'étend à partir d'un bord de la fente 31 (à savoir le bord de la fente du côté de l'avant du véhicule dans l'exemple représenté) vers le centre du pare-boue (i.e., le centre imaginaire qui définit sa courbure afin d'épouser la forme en arc-de-cercle de l'arche du passage de roue 7). La deuxième face fermée 332 de la cuvette 33 est sensiblement d'orientation verticale (i.e., elle s'étend suivant la direction Z), et s'étend à partir du pare-boue, du coté de la saillie orienté vers intérieur du pare-boue dans la direction Y, suivant la direction Z vers le bas. La troisième face fermée 333 de la cuvette 33 est sensiblement d'orientation longitudinale (*i.e.,* elle s'étend suivant la direction X), par exemple en arc-de-cercle avec une courbure sensiblement identique à la courbure de l'arche de passage de roue et du pare-boue. Enfin, la quatrième face fermée 334 de la cuvette 33 est d'orientation sensiblement radiale, comme la face 331 dont elle est l'opposée dans le parallélépipède ouvert que forme la cuvette 33 selon ce mode de réalisation.

Dans l'exemple montré aux figures, la cuvette 33 est adjacente à la découpe en forme de fente 31, suivant la direction longitudinale X du véhicule, du côté de la fente 31 qui est vers l'avant dudit véhicule. Dit autrement, la fente 31 est à l'arrière de la cuvette 33 suivant la direction longitudinale X du véhicule. Comme la jonction entre le côté de caisse et le pare-chocs arrière est plus généralement située dans l'hémisphère arrière du passage de roue, d'une part, et comme la cuvette 33 fait saillie vers le centre imaginaire du pare-boue, d'autre part, il s'ensuit que la fente 31 est encore moins visible par un observateur situé dans le passage de roue car elle peut être masquée par la cuvette 33, selon l'angle d'observation. Toutefois, la cuvette 33 peut aussi être disposée en arrière de la fente 31 (ou, dit autrement, la fente 31 peut aussi être disposée en avant de la cuvette 33), notamment si le passage de roue qui est habillé par le pare-boue est un passage de roue avant, délimité par des portions respectives d'une aile avant et d'un pare-chocs avant, par exemple.

On va maintenant décrire le montage du pare-boue 3 sur l'arche de passage de roue 7, en référence aux **figures 2B-2C** et aux **figures 3B-3C****.**

Comme il a déjà été évoqué plus haut, le côté de caisse 1 ainsi que le pare-chocs 2 comprennent chacun un bord tombé d'orientation transversale 12 et 22, respectivement. Ces bords tombés 12 et 22 sont visibles à la figure 2C. Ces bords tombés 12 et 22 sont une continuité courbée de la tôle du côté de caisse 1 ou de la feuille de résine armée du pare-chocs arrière 2, qui s'étendent transversalement au véhicule, c'est-à-dire suivant la direction transversale Y, à partir du bord extérieur du côté de caisse 1 ou du bord extérieur du pare-chocs arrière 2, respectivement. Bien entendu, les bords tombés 12 et 22 sont de forme en arc-de-cercle suivant la direction longitudinale X, puisqu'ils suivent les portions 8 ou 9 en forme d'arc-de-cercle du côté de caisse 1 et du pare-chocs arrière 2, respectivement.

Ainsi qu'on peut le voir en particulier à la **figure 2C****,** le pare-boue est monté en appui par des portions 32a et 32b de son bord extérieur qui sont situées en avant et en arrière de la fente 31, respectivement, par-dessus le bord tombé 12 du côté de caisse 1 et par-dessous le bord tombé 22 du pare-chocs 2, respectivement. Ceci n'est toutefois qu'un exemple d'un tel montage de type « par-dessus / par-dessous », car on peut lui substituer un montage inverse dans lequel le pare-boue serait monté en appui par les portions 32a et 32a de de son bord extérieur par-dessous le bord tombé 12 du côté de caisse 1 et par-dessus le bord tombé 22 du pare-chocs 2, respectivement.

La fente 31 permet la déformation du bord extérieur du pare-boue qui est nécessaire afin de réaliser un tel montage de type « par-dessus / par-dessous ». Cette déformation est provoquée par un effort, c'est-à-dire une contrainte, que l'opérateur-monteur imprime au pare-boue, par exemple manuellement, lors de son montage sur le véhicule. L'homme du métier appréciera que ce montage intervient après que le pare-chocs 2 ait été lui-même monté et fixé au côté de caisse 1.

Pour conclure, on va finalement décrire la fixation entre eux du côté de caisse 1 et du pare-chocs 2, en référence à la **figure 3D**. On rappelle que cette figure est une vue de dessus du pare-boue 3. C'est pourquoi elle laisse apparaître les portions du côté de caisse 1 et du pare-chocs 2 qui délimitent le passage de roue, étant donné que le pare-boue recouvre ces éléments de carrosserie par le dessous ainsi qu'il a déjà été dit.

Afin de permettre la fixation du pare-chocs 2 avec le côté de caisse 1, ces deux éléments de carrosserie comprennent chacun un bord tombé d'orientation radiale, respectivement 11 et 21. Le bord tombé 21 du pare-chocs 2 n'est pas visible à la figure 2B, mais le bord tombé 11 du côté de caisse 1 est visible, en coupe, à la figure 3B. Les deux bords tombés 11 et 21 du côté de caisse 1 et du pare-chocs arrière 2, respectivement, sont visibles en coupe à la figure 3C ainsi qu'à la figure 3D.

Lors du montage, le pare-chocs est tout d'abord amené contre le côté de caisse 1, de manière que son bord tombé d'orientation radiale 11 appuie contre le bord tombé d'orientation radiale 21 dudit côté de caisse 1. Des moyens d'encliquetage, ou des agrafes, peuvent permettre de maintenir ces deux éléments de carrosserie en position au moins le temps du montage. Toutefois, la fixation ferme du pare-chocs 2 avec le côté de caisse 1 met en oeuvre un presseur de pare-chocs 40 et des éléments de fixation associés, comme notamment une agrafe 50 et un ensemble vis-écrou 51, par exemple, qui sont visibles à la figure 3D. D'autres éléments de fixation identiques ou similaires, peuvent être utilisés en complément des éléments de fixation ci-dessus, afin de serrer le presseur de pare-chocs avec les bords tombés 11 et 21 du côté de caisse 1 et du pare-chocs 2, respectivement.

On notera que, en soi, le montage et la fixation du pare-chocs 2 sur le côté de caisse 1 sont bien connus de l'homme du métier. Leur description détaillée sortirait du cadre de la présente description. Il suffit de mentionner ici que les éléments assurant ce montage et cette fixation, notamment les bords tombés d'orientation axiale 11 et 21 du côté de caisse 1 et du pare-chocs 2, respectivement, mais aussi le presseur de pare-chocs 40, sont entourés par la cuvette 33 du pare-boue lorsque celui-ci est ensuite monté. Dit autrement, ces éléments échappent dans la cuvette 33. Les dimensions de la cuvette 33 sont déterminées de manière à procurer un jeu suffisant à cet effet.

Le côté de caisse du véhicule est généralement réalisé en métal bien que, de plus en plus, des réalisations en matériau synthétique soient préférées en raison de leur légèreté et de leur souplesse qui améliore la sécurité passive des véhicules et réduisent les conséquences financières des réparations en cas de chocs. Le pare-chocs arrière est généralement réalisé en matériau synthétique, qui lui confère une souplesse autorisant sa déformation élastique (c'est-à-dire avec retour à la forme initiale) en cas de choc à petite vitesse, et le rend économique et facile à recycler. Le pare-boue 3 peut être réalisé, par exemple, à partir de fibres textiles en sorte qu'il est léger, peu cher, et également facilement recyclable. En variante, le pare-boue peut être réalisé en tôle emboutie et découpée, ce qui autorise la réalisation de formes complexes avec plus de précision.

L'invention a été décrite dans ce qui précède dans son application à un pare-boue pour l'habillage d'un passage de roue arrière. Les éléments de carrosserie externes qui délimitent un tel passage de roue arrière sont un côté de caisse et le pare-chocs arrière, ainsi qu'il a été dit. Toutefois, l'objet de l'invention ne se limite pas seulement à ce type de pièces. Il concerne également, à titre d'exemple, un pare-boue pour l'habillage d'un passage de roue avant d'un véhicule automobile. Un tel passage de roue avant est délimité par un ensemble de pièces comportant notamment une aile avant et un pare-chocs avant. Dit autrement, un pare-boue selon des modes de réalisation de l'invention peut être un élément d'habillage aussi bien d'un passage de roue avant que d'un passage de roue arrière, bien que seul ce second exemple ait été considéré dans la présente description détaillée.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en oeuvre par la personne du métier à la lecture de la présente description et des dessins annexés. L'invention reste cependant uniquement définie par les revendications ci-après.

Dans les revendications, le terme "comprendre" ou "comporter" n'exclut pas d'autres éléments ou d'autres étapes. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

## Revendications

1. Feuillure de pare-boue (3) adaptée pour habiller une arche de passage de roue (7) d'un véhicule automobile (100) délimitée, d'une part, par une portion (8) d'un premier élément de carrosserie (1) vers l'avant du véhicule et, d'autre part, par une portion (9) d'un second élément de carrosserie (2) vers l'arrière du véhicule, lesdites portions étant de formes en arc-de-cercle, coaxiales et dans le prolongement l'une de l'autre suivant la direction longitudinale (X) du véhicule,
ladite feuillure de pare-boue étant sensiblement de forme en arc-de-cercle, avec un rayon de courbure correspondant sensiblement au rayon de courbure de l'arche de passage de roue,
ladite feuillure comprenant, dans une zone destinée à recouvrir l'arche de passage de roue au niveau de la jonction (4) entre les portions respectives du premier élément de carrosserie et du second élément de carrosserie qui délimitent l'arche de passage de roue :
- une découpe en forme de fente transversale (31) s'étendant depuis un bord extérieur du pare-boue vers l'intérieur du pare-boue et adaptée pour autoriser une déformation du pare-boue lors du montage du pare-boue,
**caractérisé en ce que** ladite feuillure comprend en outre un agencement en forme de cuvette (33) adjacente à la fente transversale suivant la direction longitudinale (X) du véhicule, faisant saillie vers le centre du pare-boue afin de ménager un espace en creux sur le dessus du pare-boue qui est adapté pour échapper des parties respectives (11,21) du premier élément de carrosserie et/ou du second élément de carrosserie, et/ou des éléments de fixation (50,51) pour la fixation entre eux desdits premier et second éléments de carrosserie, ladite cuvette étant fermée dans toutes les directions sauf vers le dessus du pare-boue et sauf vers l'extérieur du passage de roue.

2. Feuillure de pare-boue selon la revendication 1, dans laquelle un bord extérieur de la feuillure comprend deux portions (32a,32b) qui sont situées en avant et en arrière, respectivement, de la fente transversale (31) suivant la direction longitudinale (X) du véhicule, et par lesquelles le pare-boue peut être monté en appui par-dessus un bord tombé d'orientation transversale (12) du premier élément de carrosserie (1) et par-dessous un bord tombé d'orientation transversale (22) du second élément de carrosserie (2), respectivement, ou vice versa.

3. Feuillure de pare-boue selon la revendication 1 ou la revendication 2, dans laquelle la cuvette a une forme sensiblement parallélépipédique, avec quatre faces fermées (331,332,333,334), et avec deux faces ouvertes vers le haut du pare-boue et vers l'extérieur du passage de roue, respectivement.

4. Feuillure de pare-boue selon la revendication 3, dans laquelle une première face fermée (331) de la cuvette (33) est sensiblement d'orientation radiale, et s'étend à partir d'un bord de la fente transversale (31) vers le centre du pare-boue.

5. Feuillure de pare-boue selon l'une quelconque des revendications 1 à 4, dans laquelle la cuvette (33) est adjacente à la fente transversale (31), suivant la direction longitudinale (X) du véhicule, de préférence du côté de ladite fente transversale qui est vers l'avant du véhicule pour une feuillure de pare-boue destinée à habiller un passage de roue arrière dudit véhicule.

6. Feuillure de pare-boue selon l'une quelconque des revendications 1 à 5, dans laquelle la largeur de la fente suivant la direction longitudinale (X) du véhicule est de 1 millimètre environ.

7. Feuillure de pare-boue selon l'une quelconque des revendications 1 à 6, dans laquelle la longueur de la fente suivant la direction transversale (Y) du véhicule est comprise entre 50 et 100 millimètres environ.

8. Véhicule automobile comprenant un passage de roue ainsi qu'une feuillure de pare-boue selon l'une quelconque des revendications 1 à 7, pour l'habillage dudit passage de roue.

9. Véhicule automobile selon la revendication 8, dans lequel le passage de roue est un passage de roue arrière dont l'arche est délimitée, d'une part, par un côté de caisse vers l'avant du véhicule et, d'autre part, par un pare-chocs arrière vers l'arrière du véhicule qui est dans le prolongement dudit côté de caisse suivant la direction longitudinale du véhicule, vers l'arrière du véhicule.

10. Véhicule automobile selon la revendication 9, dans lequel la cuvette (33) de la feuillure de pare-boue est adjacente à la fente transversale (31), suivant la direction longitudinale (X) du véhicule, du côté de ladite fente transversale qui est vers l'avant du véhicule.

## Patentansprüche

1. Radabdeckblech (3) zur Verkleidung einer Raddurchgangsboge (7) eines Kraftfahrzeugs (100), die einerseits durch einen Abschnitt (8) eines ersten Karosserieteils (1) nach vorn des Fahrzeugs und andererseits durch einen Abschnitt (9) eines zweiten Karosserieteils (2) nach hinten des Fahrzeugs begrenzt ist, wobei die Abschnitte in der Längsrichtung (X) des Fahrzeugs koaxial und in der Verlängerung zueinander kreisbogenförmig ausgebildet sind,
die Kotflügelfolie ist im Wesentlichen kreisbogenförmig mit einem Krümmungsradius, der im Wesentlichen dem Krümmungsradius des Raddurchgangsbogens entspricht,
der Falz umfasst in einem Bereich, der dazu bestimmt ist, den Raddurchgangsbogen an der Verbindungsstelle (4) zwischen den jeweiligen Abschnitten des ersten und des zweiten Karosserieteils, die den Raddurchgangsbogen begrenzen, abzudecken:
- einen Querschlitzausschnitt (31), der sich von einer Außenkante der Kotflügelscheibe in Richtung der Innenseite der Kotflügelscheibe erstreckt und so beschaffen ist, dass eine Verformung der Kotflügelscheibe während der Montage der Kotflügelscheibe möglich ist, sowie:
- eine an den Querschlitz in Fahrzeuglängsrichtung (X) angrenzende schalenförmige Anordnung (33), die zur Mitte der Kotflügel vorsteht, um einen vertieften Raum an der Oberseite der Kotflügel zu schaffen, der geeignet ist, entsprechende Teile (11, 21) des ersten Karosserieteils und/oder des zweiten Karosserieteils und/oder Befestigungselemente (50, 51) zur Befestigung des ersten und des zweiten Karosserieteils untereinander zu entweichen, wobei die Schale in allen Richtungen außer zur Oberseite der Kotflügel hin und zu geschlossen ist die Außenseite des Radkastens.

2. Stoßfänger-Falz nach Anspruch 1, bei dem eine äußere Kante des Falzes zwei Abschnitte (32a, 32b) aufweist, die jeweils vor und hinter dem Querschlitz (31) in Längsrichtung (X) des Fahrzeugs angeordnet sind, und bei dem der Stoßfänger über einer quer ausgerichteten abgewinkelten Kante (12) des ersten Karosserieteils (1) und unter einer quer ausgerichteten abgewinkelten Kante (22) des zweiten Karosserieteils (2) in Anlage bringbar ist oder umgekehrt.

3. Schlammfalz nach Anspruch 1 oder 2, wobei die Wanne eine im Wesentlichen quaderförmige Form mit vier geschlossenen Flächen (331, 332, 333, 334) und zwei nach oben offenen Flächen der Schlammwand bzw. nach außen des Radkanals aufweist.

4. Schlammfalz nach Anspruch 3, bei dem eine erste geschlossene Fläche (331) der Wanne (33) im Wesentlichen radial ausgerichtet ist und sich von einer Kante des Querschlitzes (31) zur Mitte der Schlammwand erstreckt.

5. Schlammfalz nach einem der Ansprüche 1 bis 4, bei dem die Wanne (33) in Längsrichtung (X) des Fahrzeugs an den Querschlitz (31) angrenzt, vorzugsweise auf der Seite des Querschlitzes, die nach vorne des Fahrzeugs für einen Schlammfalz zum Verkleiden eines Hinterradkanals des Fahrzeugs liegt.

6. Stoßfängerfalz nach einem der Ansprüche 1 bis 5, wobei die Breite des Schlitzes in Längsrichtung (X) des Fahrzeugs etwa 1 mm beträgt.

7. Stoßfängerfalz nach einem der Ansprüche 1 bis 6, wobei die Länge des Schlitzes in der Querrichtung (Y) des Fahrzeugs zwischen etwa 50 und 100 mm beträgt.

8. Kraftfahrzeug mit einem Radkasten und einem Kotflügel nach einem der Ansprüche 1 bis 7 zur Verkleidung des Radkastens.

9. Kraftfahrzeug nach Anspruch 8, bei dem der Raddurchgang ein Hinterraddurchgang ist, dessen Gang einerseits durch eine Aufbauseite nach vorne des Fahrzeugs und andererseits durch einen hinteren Stoßfänger nach hinten des Fahrzeugs begrenzt ist, der sich in der Verlängerung der Aufbauseite in Längsrichtung des Fahrzeugs nach hinten des Fahrzeugs erstreckt.

10. Kraftfahrzeug nach Anspruch 9, bei dem die Aussparung (33) der Aussparung an den Querschlitz (31) in Längsrichtung (X) des Fahrzeugs auf der Seite des Querschlitzes angrenzt, die sich in Fahrtrichtung des Fahrzeugs befindet.

## Claims

1. A mudguard strip (3) adapted to cover a wheel arch (7) of a motor vehicle (100) delimited, on the one hand, by a portion (8) of a first bodywork element (1) towards the front of the vehicle and, on the other hand, by a portion (9) of a second bodywork element (2) towards the rear of the vehicle, said portions being of arc-of-circle shapes, coaxial and in the extension of one another in the longitudinal direction (X) of the vehicle,
said mudguard rabbet being substantially in the shape of an arc of a circle, with a radius of curvature corresponding substantially to the radius of curvature of the wheel arch,
said rebate comprising, in an area intended to cover the wheel arch at the junction (4) between the respective portions of the first bodywork element and of the second bodywork element which delimit the wheel arch:
- a cut in the form of a transverse slit (31) extending from an outer edge of the mudguard towards the inside of the mudguard and adapted to allow deformation of the mudguard during installation of the mudguard, and:
a bowl-shaped arrangement (33) adjacent to the transverse slot in the longitudinal direction (X) of the vehicle, projecting towards the center of the mudguard in order to provide a recessed space on the top of the mudguard which is adapted to escape respective parts (11, 21) of the first bodywork element and/or of the second bodywork element, and/or fasteners (50, 51) for fastening together said first and second bodywork elements, said bowl being closed in all directions except towards the top of the mudguard and except towards the outside of the passage wheel.

2. A mudguard strip according to claim 1, in which an outer edge of the strip comprises two portions (32a, 32b) which are situated forward and backward, respectively, of the transverse slot (31) in the longitudinal direction (X) of the vehicle, and by which the mudguard can be mounted to bear over a transverse oriented fallen edge (12) of the first bodywork element (1) and under a transverse oriented fallen edge (22) of the second bodywork element (2), respectively, or vice versa.

3. A mudguard strip according to claim 1 or claim 2, in which the bowl has a substantially parallelepipedal shape, with four closed faces (331, 332, 333, 334), and with two faces open towards the top of the mudguard and towards the outside of the wheel arch, respectively.

4. A mudguard strip according to claim 3, in which a first closed face (331) of the bowl (33) is substantially radially oriented and extends from an edge of the transverse slot (31) towards the centre of the mudguard.

5. A mudguard strip according to any one of claims 1 to 4, in which the bowl (33) is adjacent to the transverse slot (31), in the longitudinal direction (X) of the vehicle, preferably on the side of said transverse slot which is towards the front of the vehicle for a mudguard strip intended to cover a rear wheel arch of said vehicle.

6. A mudguard strip according to any one of claims 1 to 5, in which the width of the slot in the longitudinal direction (X) of the vehicle is approximately 1 millimeter.

7. A mudguard strip according to any one of claims 1 to 6, in which the length of the slot in the transverse direction (Y) of the vehicle is between about 50 and 100 millimeters.

8. Motor vehicle comprising a wheel arch and a mudguard rabbet according to any one of claims 1 to 7, for the covering of said wheel arch.

9. Motor vehicle according to claim 8, in which the wheel arch is a rear wheel arch whose arch is delimited, on the one hand, by a body side towards the front of the vehicle and, on the other hand, by a rear bumper towards the rear of the vehicle which is in the extension of said body side in the longitudinal direction of the vehicle, towards the rear of the vehicle.

10. A motor vehicle according to claim 9, in which the cup (33) of the mudguard rabbet is adjacent to the transverse slot (31), in the longitudinal direction (X) of the vehicle, on the side of said transverse slot which is towards the front of the vehicle.
